# EUROPÄISCHE PATENTSCHRIFT

(11) **EP 1 352 813 B1**
(45) Veröffentlichungstag und Bekanntmachung des Hinweises auf die Patenterteilung: **24.11.2004**
(21) Anmeldenummer: 03007838.0
(22) Anmeldetag: 05.04.2003
(51) Int. Cl.: B62D 25/14

(54) **Verfahren zur Herstellung und Montage eines Querträgers und danach hergestellter Querträger**
Process of manufacturing and mounting a cross-member and cross-member obtained by this process
Procédé de fabrication et de montage d'un renfort transversal et renfort obtenu par ce procédé

(30) Priorität: 12.04.2002 DE 10216121
(43) Veröffentlichungstag der Anmeldung: 15.10.2003
(73) Patentinhaber: ADAM OPEL AG, 65423 Rüsselsheim (DE)
(72) Erfinder: Lapesch, Peter, 64367 Mühltal (DE)

(56) Entgegenhaltungen:
- WO-A-01/17842
- DE-C- 4 426 785
- DE-U- 29 619 133

## Beschreibung

Die Erfindung betrifft ein Verfahren zur Herstellung und Montage eines zum Halten einer Armaturentafel ausgebildeten Querträgers für ein Kraftfahrzeug, bei welchem der Querträger aus Leichtmetall durch Gießen erzeugt und das Gussteil anschließend mechanisch auf zumindest einer Werkzeugmaschine bearbeitet wird, um beispielsweise Anlageflächen für die Armaturentafel oder Anbauteile zu erzeugen. Weiterhin betrifft die Erfindung einen zum Halten einer Armaturentafel ausgebildeten Querträger aus Leichtmetallguss für ein Kraftfahrzeug.

Ein Querträger der vorstehenden Art, bei dem es sich aus Gründen der Gewichtseinsparung um ein Magnesium-Druckgussbauteil handelt, ist Gegenstand der DE 296 19 133 U1. Der in dieser Schrift gezeigte Querträger hat einen im montierten Zustand die A-Säulen des Kraftfahrzeugs miteinander verbindenden Rohrkörper geringen Durchmessers, an welchem verschiedene Befestigungselemente für beispielsweise die Lenksäule, für Lüftungs- und/oder Klimatisierungseinrichtungen oder für Teile des Airbagsystems angeformt sind. Die Schrift befasst sich nicht mit der Herstellung dieses Trägers und auch nicht damit, wie er optimal in ein Kraftfahrzeug eingebaut werden kann.

In der Praxis ist auch schon ein Querträger bekannt geworden, an welchem man nach der mechanischen Bearbeitung mittels einer Verschraubung einen Zentriervorsprung befestigt. Dieser Zentriervorsprung dient dazu, den Querträger bei der Montage in Bezug auf die Karosseriestruktur zu positionieren. Die Toleranzen des Querträgers und der Karosseriestruktur können jedoch in ungünstigen Fällen so sein, dass der Querträger im Kraftfahrzeug nicht ausreichend genau mittig angeordnet ist.

Der Erfindung liegt das Problem zugrunde, ein Verfahren der eingangs genannten Art so zu gestalten, dass die Positionierung des Querträgers im Kraftfahrzeug auch bei ungünstigem Aufeinandertreffen unterschiedlicher Toleranzen ausreichend genau möglich ist. Weiterhin soll ein Querträger entwickelt werden, der eine genaue Montage mit einfachen Mitteln ermöglicht.

Das erstgenannte Problem wird erfindungsgemäß dadurch gelöst, dass beim Gießen an dem Querträger an seiner vorderen, den zu bearbeitenden Flächen abgewandten Seite ein nach vorn und zugleich in Entformungsrichtung ragender Zentriervorsprung gebildet wird, dass dieser Zentriervorsprung auf der Werkzeugmaschine oder den Werkzeugmaschinen zum Festlegen der Position des Querträgers benutzt wird und dass der fertig bearbeitete Querträger anschließend mittels des Zentriervorsprungs im Kraftfahrzeug in seiner Position festgelegt wird.

Bei dieser Verfahrensweise wird der Zentriervorsprung nicht wie beim Stand der Technik nach dem Gießen des Querträgers und nach dem Erzeugen einer Aufnahmebohrung am Querträger befestigt, vielmehr wird er bereits beim Gießen des Querträgers erzeugt. Er kann deshalb schon bei der mechanischen Bearbeitung des Querträgers zur Positionierung des Querträgers auf die Werkzeugmaschine oder auf verschiedene Werkzeugmaschinen dienen. Genau der gleiche Zentriervorsprung positioniert anschließend den Querträger im Kraftfahrzeug. Deshalb ist die Positionierung in beiden Fällen mit gleicher Genauigkeit möglich, so dass es nicht zu einem ungünstigen Aufeinandertreffen unterschiedlicher Toleranzketten kommen kann. Durch das erfindungsgemäße Verfahren wird somit ein durchgängiges Aufnahmekonzept verwirklicht.

Das zweitgenannte Problem, nämlich die Schaffung eines zum Halten einer Armaturentafel ausgebildeten Querträgers aus Leichtmetallguss für ein Kraftfahrzeug, wird erfindungsgemäß dadurch gelöst, dass der Querträger einen beim Gießen erzeugten, an seiner vorderen Seite nach vorn ragenden Zentriervorsprung aufweist. Ein solscher Querträger kann bei der mechanischen Bearbeitung leicht positioniert werden. Weiterhin steht der dabei benützte Zentriervorsprung anschließend bei der Zentrierung des Querträgers im Kraftfahrzeug zur Verfügung.

Wenn der Querträger im Kraftfahrzeug mittels des Zentriervorsprungs positioniert ist, dann entstehen je nach vorhandenen Toleranzen der Karosseriestruktur an den Seiten des Querträgers unterschiedlich breite Spalten, welche durch die Befestigungsmittel überbrückt werden müssen. Das ist auf besonders einfache und zuverlässige Weise möglich, wenn zur Befestigung an einer seitlichen Karosseriestruktur an beiden Seiten des Querträgers jeweils ein Querträgerprofil mit zwei in Abstand zueinander parallel ausgerichteten Profilwänden vorgesehen sind, wenn in der der Karosseriestruktur abgewandten Profilwand von der der Karosseriestruktur abgewandten Seite her zumindest eine Blindnietmutter derart eingesetzt ist, dass diese mit einem Flansch gegen die Außenseite der Profilwand anliegt und auf der der Karosseriestruktur zugewandten Seite ihren Nietwulst hat, und wenn unter Zwischenschaltung eines Distanzstückes von der Karosseriestruktur eine Befestigungsschraube durch ein Loch der anderen Profilwand in die Blindnietmutter führt. Durch diese Gestaltung ist sichergestellt, dass die Blindnietmuttern auch bei den bei einem Crash auftretenden Beanspruchungen nicht aus dem Querträger reißen, da sie in Kraftrichtung mittels eines Anlageflansches und nicht lediglich mit dem beim Nieten erzeugten Nietwulst gegen die Profilwand anliegen. Durch die zweite, parallellaufende Profilwand kann sich ein Distanzstück sicher an dem Querträger abstützen. Eine solche Konstruktion ersetzt die bisher bei Querträgern aus Magnesium vorgesehene, separate Montageplatte mit einer angeschweißten Mutter und ist bei einem Querträger aus.Magnesiumdruckguss besonders zweckmäßig, weil dann ein Schweißen nicht möglich ist. Diese Ausgestaltung mit einer Blindnietmutter ist auch bei ansonsten gänzlich anders gestalteten Querträgern vorteilhaft.

Das Querträgerprofil kann mit den Profilwänden als ein im Querschnitt rechteckiges Hohlprofil ausgebildet sein, wodurch es besonders stabil wird.

Die Positionierung des Querträgers in Fahrzeuglängsrichtung und seine stabile Anbindung in dieser Richtung ist auf einfache Weise möglich, wenn gemäß einer anderen Weiterbildung der Erfindung an beiden Seiten ein nach außen gerichteter Anbindungsflansch zur Anlage an entsprechende Halteflächen der Karosseriestruktur vorgesehen ist.

Dabei ist es vorteilhaft, wenn in den Anbindungsflanschen Verschraubungen zur Festlegung des Querträgers in Fahrzeuglängsrichtung vorgesehen sind.

In den Querträger anzuordnende Kabelbäume werden derzeit in Kabelkanäle verlegt, die entweder am Querträger angeformt sind oder durch Verklipsen an ihm befestigt werden. Dieser Aufwand kann eingespart werden, wenn zur Halterung eines Kabelbaumes am Querträger von einer nach unten gerichteten Wand zur Abstützung des Kabelbaumes ein angegossener Steg in etwa horizontal vorspringt und wenn die nach unten gerichtete Wand zumindest eine Durchbrechung zur Aufnahme eines Klipses eines den Kabelbaum umschließenden Kabelhalters hat. Auch diese Kabelbaumbefestigung ist für sich allein unabhängig von der übrigen Gestaltung des Querträgers vorteilhaft.

Die Festigkeit des Kraftfahrzeugs kann wesentlich erhöht werden, wenn der Querträger ein der Größe der Armaturentafel angepasstes, großflächiges, schalenförmiges Bauteil mit Aussteifungsrippen auf der der Armaturentafel abgewandten, vorderen Seite ist.

Zur weiteren Erhöhung der Festigkeit des Querträgers und zur Vereinfachung von Anbauteilen trägt es bei, wenn der Querträger mit einem Träger für eine Mittelkonsole eine Baueinheit bildet.

Die Erfindung lässt verschiedene Ausführungsmöglichkeiten zu. Zur weiteren Verdeutlichung ihres Grundprinzips ist eine davon in der Zeichnung dargestellt und wird nachfolgend beschrieben. Diese zeigt in
- Fig.1: eine perspektivische Darstellung eines erfindungsgemäßen Querträgers von der Fahrzeuginnenseite aus gesehen,
- Fig.2: eine perspektivische Darstellung des Querträgers von der Fahrzeugvorderseite aus gesehen,
- Fig.3: eine perspektivische Darstellung eines Randbereiches des Querträgers,
- Fig.4: einen Schnitt durch einen Befestigungsbereich des Querträgers,
- Fig.5: einen Schnitt durch den Bereich der Befestigung eines Kabelbaumes an dem Querträger.

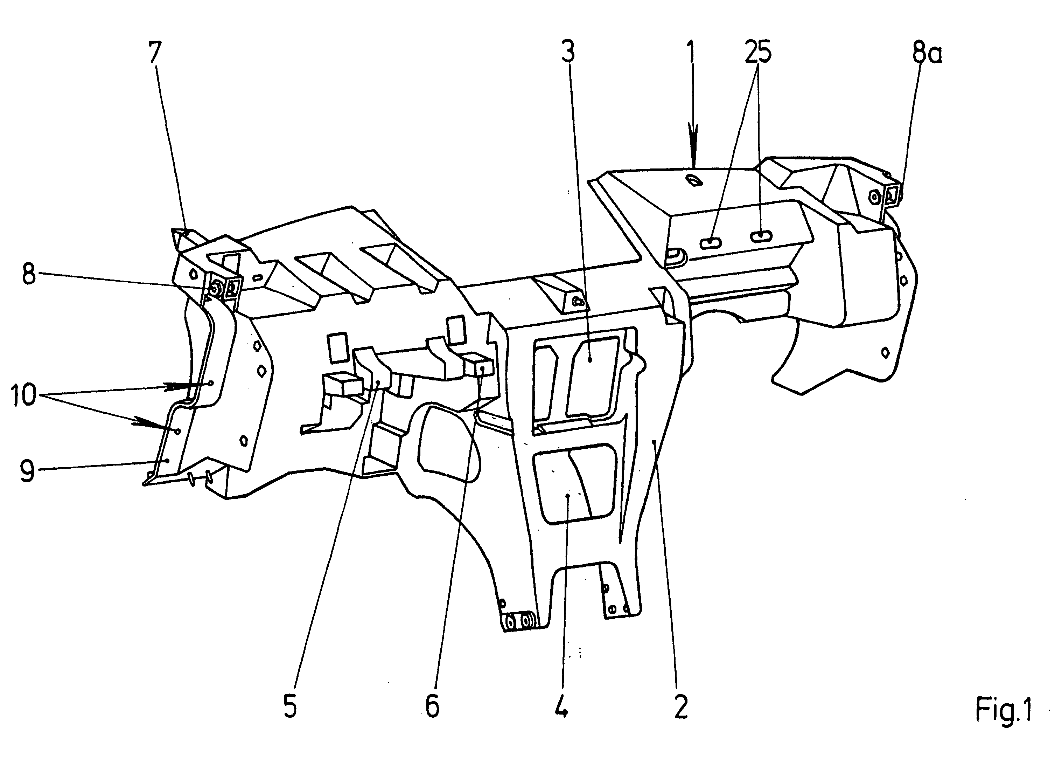

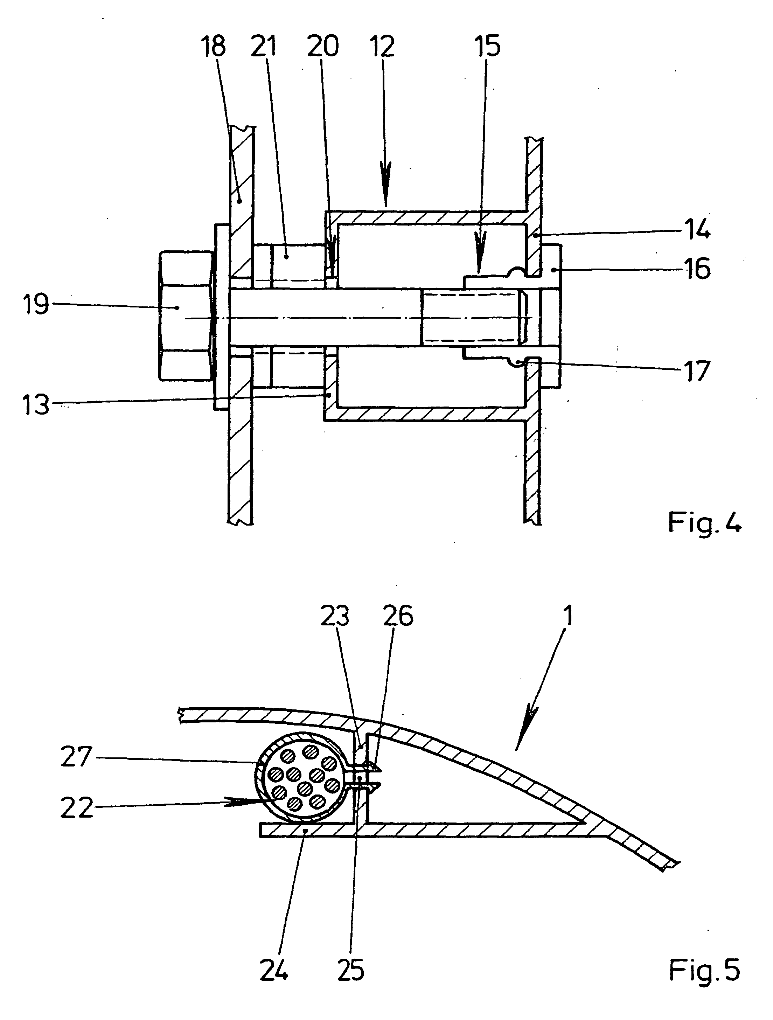

Die Figur 1 zeigt als Ganzes einen großflächig als Magnesium-Druckgussteil ausgebildeten Querträger 1, der im Kraftfahrzeug die A-Säulen miteinander verbindet und der Halterung einer Armaturentafel dient. Der Querträger 1 ist mit einem Träger 2 zur Halterung einer nicht gezeigten Mittelkonsole als ein einstückiges Bauteil ausgebildet. In ihm sind verschiedene Ausnehmungen 3, 4 für verschiedene Einbauteile, beispielsweise ein Radio oder eine Fahrzeugnavigation, vorgesehen. Weiterhin hat der Querträger 1 unterschiedliche Anlageflächen 5, 6, beispielsweise für die Befestigung von Instrumenten oder der Lenkung. An der linken, vorderen Seite des Querträgers erkennt man einen Zentriervorsprung 7, der bei der Herstellung des Querträgers 1 an ihm angegossen wurde und sowohl bei seiner mechanischen Bearbeitung als auch bei seiner Montage im Kraftfahrzeug der genauen Positionierung des Querträgers 1 dient. Wenn der Querträger 1 mit einer Karosseriestruktur aus Stahl verbunden wird, dann setzt man auf diesen Zentriervorsprung 7 ein Kunststoffteil, damit das Material des Querträgers 1 keine Berührung mit dem Stahlblech hat. Im rechten Bereich des Querträgers 1 erkennt man zwei Durchbrechungen 25, die der Befestigung eines in Figur 5 gezeigten Kabelbaumes 22 dienen.

An der linken und rechten Seite des Querträgers 1 erkennt man jeweils ein Distanzstück 8, 8a, dessen Befestigung für die vorliegende Erfindung wichtig ist und die später genauer beschrieben wird. An der linken Seite des Querträgers 1 ist ein auch an der rechten Seite vorhandener Anbindungsflansch 9 zu sehen, der sich bei montiertem Querträger 1 auf eine entsprechende Karosseriestruktur aufsetzt und dort mittels Verschraubungen 10 befestigt wird.

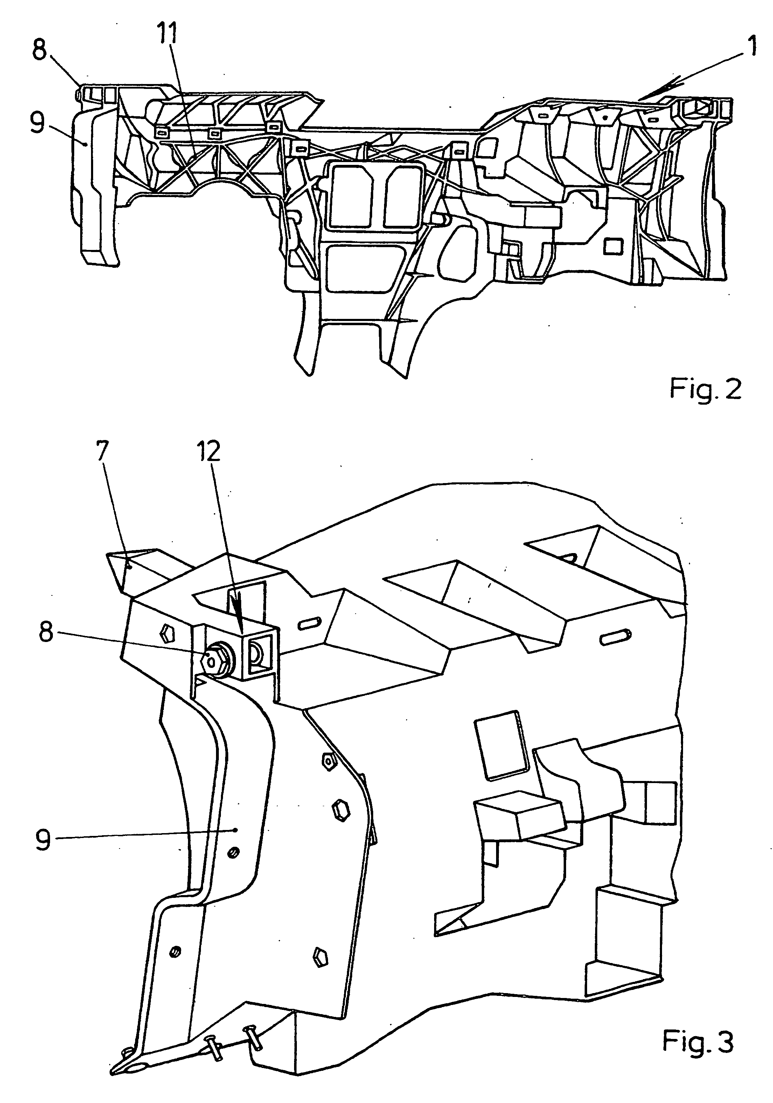

Die Figur 2 lässt erkennen, dass der Querträger 1 schalenförmig ausgebildet ist und in seiner Rückseite eine Vielzahl von Aussteifungsrippen 11 zu seiner Aussteifung aufweist. Ebenfalls erkennt man in Figur 2 den Anbindungsflansch 9 und das Distanzstück 8.

Die vergrößerte Darstellung gemäß Figur 3 lässt erkennen, dass das Distanzstück 8 auf der Außenseite eines im Querschnitt rechteckigen, hohlen Querträgerprofils 12 befestigt ist. Die genaue Gestaltung dieser Befestigung ergibt sich aus Figur 4.

Die Figur 4 zeigt, dass das Querträgerprofil 12 zwei parallel zueinander ausgerichtete Profilwände 13, 14 hat. In der Profilwand 14 wurde in Figur 4 gesehen von rechts, also von der Fahrzeuginnenseite her, eine Blindnietmutter 15 derart eingesetzt, dass sie mit ihrem Flansch 16 gegen die äußere Seite der Profilwand 14 anliegt. Ein beim Vernieten erzeugter Nietwulst 17 liegt dann gegen die innere Seite der Profilwand 14 an. Die Figur 4 lässt weiterhin schematisch eine Karosseriestruktur 18 erkennen, durch die hindurch und durch ein Loch 20 der äußeren Profilwand 13 eine Befestigungsschraube 19 in die Blindnietmutter 15 führt. Zwischen der Karosseriestruktur 18 und der Außenseite der äußeren Profilwand 13 ist ein Distanzstück 21 üblicher Bauart angeordnet, welches den Spalt zwischen der Profilwand 13 und der Karosseriestruktur 18 überbrückt und das so ausgebildet ist, dass es beim Einschrauben der Befestigungsschraube 19 sich gegen diese beiden Teile anlegt, indem es entsprechend dicker wird.

Die Figur 5 zeigt, wie am Querträger 1 ein Kabelbaum 22 befestigt ist. Zu erkennen ist eine nach unten gerichtete Wand 23 des Querträgers 1, von der aus ein Steg 24 in etwa horizontal vorspringt. Auf diesem Steg 24 liegt der Kabelbaum 22 auf. Er wird in dieser Position von einem den Kabelbaum 22 umschließenden Kabelhalter 27 fixiert, der hierzu einen Klips 26 hat, welcher in einer Durchbrechung 25 der Wand 23 verrastet ist. Das Gewicht des Kabelbaumes 22 wird vom Steg 24 abgetragen, so dass der Kabelhalter 27 nur die Aufgabe hat, ein Wegrutschen des Kabelbaumes 22 in horizontaler Richtung zu verhindern.

### Bezugszeichenliste

- 1: Querträger
- 2: Träger
- 3: Ausnehmung
- 4: Ausnehmung
- 5: Anlagefläche

- 6: Anlagefläche
- 7: Zentriervorsprung
- 8: Distanzstück
- 8a: Distanzstück
- 9: Anbindungsflansch
- 10: Verschraubung

- 11: Aussteifungsrippe
- 12: Querträgerprofil
- 13: Profilwand
- 14: Profilwand
- 15: Blindnietmutter

- 16: Flansch
- 17: Nietwulst
- 18: Karosseriestruktur
- 19: Befestigungsschraube
- 20: Loch

- 21: Distanzstück
- 22: Kabelbaum
- 23: Wand
- 24: Steg
- 25: Durchbrechung

- 26: Klips
- 27: Kabelhalter

## Patentansprüche

1. Verfahren zur Herstellung und Montage eines zum Halten einer Armaturentafel ausgebildeten Querträgers (1) für ein Kraftfahrzeug, bei welchem der Querträger (1) aus Leichtmetallguss durch Gießen erzeugt und das Gussteil anschließend mechanisch auf zumindest einer Werkzeugmaschine bearbeitet wird, um beispielsweise Anlageflächen (5, 6) für die Armaturentafel oder Anbauteile zu erzeugen, **dadurch gekennzeichnet, dass** beim Gießen an dem Querträger (1) an seiner vorderen, den zu bearbeitenden Flächen abgewandten Seite ein nach vorn und zugleich in Entformungsrichtung ragender Zentriervorsprung (7) gebildet wird, dass dieser Zentriervorsprung (7) auf der Werkzeugmaschine oder den Werkzeugmaschinen zum Festlegen der Position des Querträgers (1) benutzt wird und dass der fertig bearbeitete Querträger (1) anschließend mittels des Zentriervorsprungs (7) im Kraftfahrzeug in seiner Position festgelegt wird.

2. Zum Halten einer Armaturentafel ausgebildeter Querträger (1) aus Leichtmetallguss für ein Kraftfahrzeug, **dadurch gekennzeichnet, dass** der Querträger (1) einen beim Gießen erzeugten, an seiner vorderen Seite nach vorn ragenden Zentriervorsprung (7) aufweist.

3. Querträger nach Anspruch 2, **dadurch gekennzeichnet, dass** zur Befestigung an einer seitlichen Karosseriestruktur (18) an beiden Seiten des Querträgers (1) jeweils ein Querträgerprofil (12) mit zwei in Abstand zueinander parallel ausgerichteten Profilwänden (13, 14) vorgesehen sind, dass in der der Karosseriestruktur (18) abgewandten Profilwand (14) von der der Karosseriestruktur (18) abgewandten Seite her zumindest eine Blindnietmutter (15) derart eingesetzt ist, dass diese mit einem Flansch (16) gegen die Außenseite der Profilwand (14) anliegt und auf der der Karosseriestruktur (18) zugewandten Seite ihren Nietwulst (17) hat, und dass unter Zwischenschaltung eines Distanzstückes (21) von der Karosseriestruktur (18) eine Befestigungsschraube (19) durch ein Loch (20) der anderen Profilwand (13) in die Blindnietmutter (15) führt.

4. Querträger nach Anspruch 3, **dadurch gekennzeichnet, dass** das Querträgerprofil (12) mit den Profilwänden (13, 14) als ein im Querschnitt rechteckiges Hohlprofil ausgebildet ist.

5. Querträger nach zumindest einem der Ansprüche 2 bis 4, **dadurch gekennzeichnet, dass** an beiden Seiten ein nach außen gerichteter Anbindungsflansch (9) zur Anlage an entsprechende Halteflächen der Karosseriestruktur vorgesehen ist.

6. Querträger nach Anspruch 5, **dadurch gekennzeichnet, dass** in den Anbindungsflanschen (9) Verschraubungen (10) zur Festlegung des Querträgers (1) in Fahrzeuglängsrichtung vorgesehen sind.

7. Querträger nach zumindest einem der Ansprüche 2 bis 6, **dadurch gekennzeichnet, dass** zur Halterung eines Kabelbaumes (22) am Querträger (1) von einer nach unten gerichteten Wand (23) zur Abstützung des Kabelbaumes (22) ein angegossener Steg (24) in etwa horizontal vorspringt und dass die nach unten gerichtete Wand (23) zumindest eine Durchbrechung (25) zur Aufnahme eines Klipses (26) eines den Kabelbaum (22) umschließenden Kabelhalters (27) hat.

8. Querträger nach zumindest einem der Ansprüche 2 bis 7, **dadurch gekennzeichnet, dass** er als ein der Größe der Armaturentafel angepasstes, großflächiges, schalenförmiges Bauteil mit Aussteifungsrippen (11) auf der der Armaturentafel abgewandten, vorderen Seite ausgebildet ist.

9. Querträger nach Anspruch 8, **dadurch gekennzeichnet, dass** er mit einem Träger (2) für eine Mittelkonsole eine Baueinheit bildet.

## Claims

1. Method for the manufacture and assembly of a cross member (1) designed to hold an instrument panel for a motor vehicle, in which the cross member (1) is produced from light alloy by casting and the casting is then machined on at least one machine tool in order to produce, for example, contact surfaces (5, 6) for the instrument panel or attachments, **characterised in that**, during casting, on the cross member (1) on its front side facing away from the surfaces to be machined is formed a centring projection (7) extending forwardly and also in the direction of removal from the mould, **in that** this centring projection (7) is used on the machine tool or machine tools to fix the position of the cross member (1), and **in that** the fully machined cross member (1) is then fixed in position in the motor vehicle by means of the centring projection (7).

2. Cross member (1) made of light alloy designed to hold an instrument panel for a motor vehicle, **characterised in that** the cross member (1) has a centring projection (7) produced during casting and extending forwardly on its front side.

3. Cross member according to claim 2, **characterised in that**, for attachment to a lateral body structure (18), on either side of the cross member (1) is provided in each case a cross member profile (12) with two profile walls (13, 14) oriented parallel and at a distance from each other, **in that** at least one blind rivet nut (15) is inserted in the profile wall (14) facing away from the body structure (18), from the side facing away from the body structure (18), in such a way that the blind rivet nut (15) abuts by a flange (16) against the outer side of the profile wall (14) and has its rivet bead (17) on the side facing towards the body structure (18), and **in that**, with the interposition of a distance piece (21), from the body structure (18) a fastening bolt (19) leads through a hole (20) in the other profile wall (13) into the blind rivet nut (15).

4. Cross member according to claim 3, **characterised in that** the cross member profile (12) with the profile walls (13, 14) is designed as a hollow profile of rectangular cross-section.

5. Cross member according to one or more of claims 2 to 4, **characterised in that** on both sides is provided an outwardly directed connecting flange (9) for contact with corresponding holding surfaces of the body structure.

6. Cross member according to claim 5, **characterised in that** in the connecting flanges (9) are provided screw joints (10) for fixing the cross member (1) in the longitudinal direction of the vehicle.

7. Cross member according to one or more of claims 2 to 6, **characterised in that**, for supporting a cable harness (22) on the cross member (1), an integrally cast web (24) projects approximately horizontally from a downwardly directed wall (23) for supporting the cable harness (22), and **in that** the downwardly directed wall (23) has at least one aperture (25) for receiving a clip (26) of a cable holder (27) surrounding the cable harness (22).

8. Cross member according to one or more of claims 2 to 7, **characterised in that** it is constructed as a shell-like component having a large surface area and adapted to the size of the instrument panel, with reinforcing ribs (11) on the front side facing away from the instrument panel.

9. Cross member according to claim 8, **characterised in that** it forms a unit with a support (2) for a centre console.

## Revendications

1. Procédé de fabrication et de montage d'un renfort transversal (1) réalisé pour le maintien d'un tableau de bord, pour un véhicule automobile, dans lequel le renfort transversal (1) est réalisé en fonte de métal léger par coulée de métal et la pièce moulée est ensuite usinée mécaniquement sur au moins une machine-outil, pour par exemple produire des faces d'appui (5, 6) pour le tableau de bord ou des pièces rapportées, **caractérisé en ce que**, lors de la coulée, sur le renfort transversal (1), sur sa face avant, opposée aux faces à usiner, est formée une saillie de centrage (7) se projetant vers l'avant et, en même temps, dans la direction de démoulage, **en ce que** cette saillie de centrage (7) est utilisée sur la machine-outil ou sur les machines-outils, pour la fixation de la position du renfort transversal (1), et **en ce que** le renfort transversal (1) dont l'usinage est achevé est ensuite fixé à sa position dans le véhicule automobile, à l'aide de la saillie de centrage (7).

2. Renfort transversal (1) réalisé pour le maintien d'un tableau de bord, en fonte de métal léger pour un véhicule automobile, **caractérisé en ce que** le renfort transversal (1) présente une saillie de centrage (7) produite lors de la coulée, se projetant vers l'avant sur sa face avant.

3. Renfort transversal selon la revendication 2, **caractérisé en ce que**, pour assurer la fixation sur une structure de carrosserie (18) latérale, sur chacune des deux faces du renfort transversal (1) sont chaque fois prévus un profilé de renfort transversal (12) comprenant deux parois de profilé (13, 14) orientées parallèlement l'une à l'autre et à distance l'une de l'autre, **en ce que**, dans la paroi de profilé (14) située à l'opposée à la structure de carrosserie (18), depuis la face opposée à la structure de carrosserie (18), est inséré au moins un écrou formant rivet borgne (15), de manière que celui-ci vienne en appui, par une bride (16), contre la face extérieure de la paroi de profilé (14) et présente, sur la face tournée vers la structure de carrosserie (18), son bourrelet de rivetage (17), et **en ce que**, avec interposition d'une pièce d'espacement (21) par rapport à la structure de carrosserie (18), une vis de fixation (19) est passée par un trou (20) de l'autre paroi de profilé (13), dans l'écrou formant rivet borgne (15).

4. Renfort transversal selon la revendication 3, **caractérisé en ce que** le profilé de renfort transversal (12) est réalisé, avec les parois de profilé (13, 14), sous forme d'un profilé creux à section transversale rectangulaire.

5. Renfort transversal selon au moins l'une des revendications 2 à 4, **caractérisé en ce que**, sur les deux côtés, est prévue un rebord d'attachement (9) orienté vers l'extérieur, servant à l'appui sur des faces de maintien correspondantes de la structure de carrosserie.

6. Renfort transversal selon la revendication 5, **caractérisé en ce que** des vissages (10), servant à la fixation du renfort transversal (1), sont prévus dans la direction longitudinale de la carrosserie, dans les rebords d'attachement (9).

7. Renfort transversal selon au moins l'une des revendications 2 à 6, **caractérisé en ce que**, pour assurer la fixation d'un harnais de câbles (22) sur le renfort transversal (1), une nervure (24) unitaire, venant de fonderie, fait saillie à peu près horizontalement depuis une paroi (23) orientée vers le bas, afin de soutenir le harnais de câbles (22), et **en ce que** la paroi (23) orientée vers le bas comprend au moins un passage (25), servant au logement d'une attache (26) d'un support de câble (27) entourant le harnais de câbles (22).

8. Renfort transversal selon au moins l'une des revendications 2 à 7, **caractérisé en ce qu'**il est réalisé sous la forme de composant en forme de coque, de grande surface, adapté à la taille du tableau de bord, avec des nervures de rigidification (11) sur la face avant, située à l'opposée du tableau de bord.

9. Renfort transversal selon la revendication 8, **caractérisé en ce qu'**il forme un ensemble de construction avec une poutre (2) prévue pour une console centrale.
